# EUROPEAN PATENT APPLICATION

(11) **EP 4 804 470 A1**
(43) Date of publication of application: **09.09.2026**
(21) Application number: 24893424.2
(22) Date of filing: 19.11.2024
(51) Int. Cl.: H04L 27/26

(54) **DATA TRANSMISSION METHOD AND APPARATUS**

(30) Priority: 24.11.2023 CN 202311603273
(71) Applicant: Huawei Technologies Co., Ltd., Shenzhen, Guangdong 518129 (CN)
(72) Inventor: LIU, Chenchen, Shenzhen, Guangdong 518129 (CN); ZHOU, Zhengchun, Chengdu, Sichuan 611756 (CN); GAN, Ming, Shenzhen, Guangdong 518129 (CN)
(74) Representative: Maiwald GmbH
(86) International application number: PCT/CN2024/132960
(87) International publication number: WO 2025/108267

(57) **Abstract**

This application provides a data transmission method and an apparatus, to reduce a PAPR of data, along with a smaller computing amount and lower device complexity. In the method, a first apparatus generates first frequency domain data, and the first apparatus maps the first frequency domain data to a tone included in a transmission bandwidth for transmission. The transmission bandwidth includes a first transmission bandwidth and a second transmission bandwidth, the first frequency domain data includes second frequency domain data mapped to a first tone included in the first transmission bandwidth and third frequency domain data mapped to a second tone included in the second transmission bandwidth, and the second frequency domain data is in mirror conjugation and alternating negation with the third frequency domain data. According to the foregoing solution, the transmit end maps the data duplicated in frequency domain to the first tone and the second tone respectively, and the duplicated frequency domain data is in mirror conjugation and alternating negation with each other. This reduces a PAPR of data, achieves a smaller computing amount in comparison with an exhaustive method, and reduces device complexity.

## Description

### CROSS-REFERENCE TO RELATED APPLICATIONS

This application claims priority to Chinese Patent Application No. 202311603273.0, filed with the China National Intellectual Property Administration on November 24, 2023 and entitled "DATA TRANSMISSION METHOD AND APPARATUS", which is incorporated herein by reference in its entirety.

### TECHNICAL FIELD

This application relates to the field of wireless communication technologies, and in particular, to a data transmission method and an apparatus.

### BACKGROUND

Currently, to reduce a loss rate of data packets, data obtained after coding and modulation is duplicated, so that reliability of data transmission is improved through simple duplication. However, because most 802.11 standards employ an orthogonal frequency division multiplexing (orthogonal frequency division multiplexing, OFDM) modulation scheme, direct duplication in frequency domain leads to a high peak-to-average power ratio (peak-to-average power ratio, PAPR) of a time domain signal. Such a high-PAPR signal is usually undesirable because it imposes stress on an analog circuit.

A commonly used method is to perform phase rotation on each duplicated signal. To reduce complexity, there are generally only two types of rotation: 0-degree rotation and 180-degree rotation. To be specific, each piece of duplicated data is multiplied by 1 or -1 to find an optimal rotation factor sequence, so that a duplicated signal obtained after rotation has a low PAPR. Because transmitted modulated data is random, and optimal rotation factors vary for different data, a rotation factor sequence is usually found to minimize a median of PAPRs of the data. Although this manner can reduce the PAPR of the data to some extent, the optimal rotation factors of the data usually need to be searched for exhaustively based on tone division and a quantity of duplications, leading to a large computing amount.

### SUMMARY

This application provides a data transmission method and an apparatus, to reduce a PAPR of data, along with a smaller computing amount and lower device complexity.

According to a first aspect, a data transmission method is provided. The method may be performed by a first apparatus or a chip/chip system. It may be understood that the first apparatus may be an access point or a station. In the method, the first apparatus generates first frequency domain data, and the first apparatus maps the first frequency domain data to a tone included in a transmission bandwidth for transmission. The transmission bandwidth includes a first transmission bandwidth and a second transmission bandwidth, the first frequency domain data includes second frequency domain data mapped to a first tone included in the first transmission bandwidth and third frequency domain data mapped to a second tone included in the second transmission bandwidth, and the second frequency domain data is in mirror conjugation and alternating negation with the third frequency domain data.

According to the foregoing solution, the third frequency domain data is in mirror conjugation and alternating negation with the second frequency domain data, but the second frequency domain data and the third frequency domain data bear same information. This may be considered as a manner of data duplication. The transmit end maps the data duplicated in frequency domain to the first tone and the second tone respectively, and the duplicated frequency domain data is in mirror conjugation and alternating negation with each other. Therefore, the frequency domain data on the first tone and the frequency domain data on the second tone are no longer simply identically duplicated. This reduces a PAPR at the transmit end, achieves a smaller computing amount in comparison with an exhaustive method, and reduces device complexity.

In a possible implementation, the second frequency domain data includes a first frequency domain data segment and a second frequency domain data segment. The first frequency domain data segment is a frequency domain data segment obtained through spreading based on a first spreading sequence, and the second frequency domain data segment is a frequency domain data segment obtained through spreading based on a second spreading sequence. It should be noted that the first spreading sequence and the second spreading sequence are Golay complementary sequences.

According to the foregoing solution, the first apparatus may perform spreading on the first frequency domain data segment and the second frequency domain data segment based on the Golay complementary sequences, so that data obtained through spreading has a low PAPR.

In a possible implementation, the first frequency domain data mapped to the tone is sent by using a first spatial stream, and fourth frequency domain data is sent by using a second spatial stream. The first frequency domain data mapped to the tone is orthogonal to the fourth frequency domain data. According to the foregoing solution, the first apparatus may duplicate data in spatial domain, to improve data reliability.

In a possible implementation, the fourth frequency domain data is in a reverse order of the first frequency domain data. According to the foregoing solution, the first apparatus may determine the fourth frequency domain data orthogonal to the first frequency domain data by determining the reverse order of the first frequency domain data.

In a possible implementation, the fourth frequency domain data includes fifth frequency domain data and sixth frequency domain data; and the fifth frequency domain data is opposite to the second frequency domain data; or the fifth frequency domain data is mapped to the first tone for transmission, the sixth frequency domain data is mapped to the second tone for transmission, the fifth frequency domain data is the same as the third frequency domain data, and the sixth frequency domain data is opposite to the first frequency domain data.

According to the foregoing solution, the first apparatus may determine two types of fourth frequency domain data orthogonal to the first frequency domain data, so that data that carries same information may be sent by using a plurality of spatial streams, to improve data reliability.

In a possible implementation, the second frequency domain data includes a first frequency domain data segment and a second frequency domain data segment. The first frequency domain data segment is a frequency domain data segment obtained through spreading based on a first spreading sequence, and the second frequency domain data segment is a frequency domain data segment obtained through spreading based on a second spreading sequence. It should be noted that the first spreading sequence and the second spreading sequence are Golay complementary sequences. Similarly, the fourth frequency domain data includes fifth frequency domain data and sixth frequency domain data, the fifth frequency domain data is in mirror conjugation and alternating negation with the sixth frequency domain data, and the fifth frequency domain data includes a third frequency domain data segment and a fourth frequency domain data segment. The third frequency domain data segment is a frequency domain data segment obtained through spreading based on a third spreading sequence, and the fourth frequency domain data segment is a frequency domain data segment obtained through spreading based on a fourth spreading sequence. It should be noted that the third spreading sequence is orthogonal to the first spreading sequence, and the fourth spreading sequence is orthogonal to the second spreading sequence.

According to the foregoing solution, the first apparatus may determine a plurality of pairs of orthogonal Golay complementary sequences, to construct a plurality of pieces of data that carries same information, so as to send, by using more spatial streams, the data that carries the same information, so that data reliability can be improved.

According to a second aspect, a data transmission method is provided. The method may be performed by a second apparatus or a chip/chip system. The second apparatus may be an access point or a station. In the method, the second apparatus receives first frequency domain data on a transmission bandwidth, where the first frequency domain data includes second frequency domain data transmitted on a first tone included in a first transmission bandwidth and third frequency domain data transmitted on a second tone included in a second transmission bandwidth. The second apparatus parses, based on a first spreading sequence and a second spreading sequence, the second frequency domain data and the third frequency domain data that are included in the first frequency domain data, where the first spreading sequence and the second spreading sequence are Golay complementary sequences.

In a possible implementation, the second apparatus obtains the first frequency domain data by using a first spatial stream, and obtains fourth frequency domain data by using a second spatial stream. The first frequency domain data is orthogonal to the fourth frequency domain data.

In a possible implementation, the second apparatus parses the fourth frequency domain data based on the first spreading sequence and the second spreading sequence.

In a possible implementation, the second apparatus parses the fourth frequency domain data based on a third spreading sequence and a fourth spreading sequence, where the third spreading sequence and the fourth spreading sequence are Golay complementary sequences, the third spreading sequence is orthogonal to the first spreading sequence, and the fourth spreading sequence is orthogonal to the second spreading sequence.

According to a third aspect, a communication apparatus is provided, and includes a processing unit and a transceiver unit.

The processing unit is configured to generate first frequency domain data. The transceiver unit is configured to map the first frequency domain data to a tone included in a transmission bandwidth for transmission. The transmission bandwidth includes a first transmission bandwidth and a second transmission bandwidth, the first frequency domain data includes second frequency domain data mapped to a first tone included in the first transmission bandwidth and third frequency domain data mapped to a second tone included in the second transmission bandwidth, and the second frequency domain data is in mirror conjugation and alternating negation with the third frequency domain data.

In a possible implementation, the second frequency domain data includes a first frequency domain data segment and a second frequency domain data segment. The first frequency domain data segment is a frequency domain data segment obtained through spreading based on a first spreading sequence, and the second frequency domain data segment is a frequency domain data segment obtained through spreading based on a second spreading sequence. The first spreading sequence and the second spreading sequence are Golay complementary sequences.

In a possible implementation, the transceiver unit is specifically configured to send, by using a first spatial stream, the first frequency domain data mapped to the tone. The transceiver unit is further configured to send fourth frequency domain data by using a second spatial stream. The first frequency domain data mapped to the tone is orthogonal to the fourth frequency domain data.

In a possible implementation, the fourth frequency domain data is in a reverse order of the first frequency domain data.

In a possible implementation, the fourth frequency domain data includes fifth frequency domain data and sixth frequency domain data; and the fifth frequency domain data is opposite to the second frequency domain data; or the fifth frequency domain data is mapped to the first tone for transmission, the sixth frequency domain data is mapped to the second tone for transmission, the fifth frequency domain data is the same as the third frequency domain data, and the sixth frequency domain data is opposite to the first frequency domain data.

In a possible implementation, the second frequency domain data includes a first frequency domain data segment and a second frequency domain data segment. The first frequency domain data segment is a frequency domain data segment obtained through spreading based on a first spreading sequence, and the second frequency domain data segment is a frequency domain data segment obtained through spreading based on a second spreading sequence. The first spreading sequence and the second spreading sequence are Golay complementary sequences. The fourth frequency domain data includes fifth frequency domain data and sixth frequency domain data, the fifth frequency domain data is in mirror conjugation and alternating negation with the sixth frequency domain data, and the fifth frequency domain data includes a third frequency domain data segment and a fourth frequency domain data segment. The third frequency domain data segment is a frequency domain data segment obtained through spreading based on a third spreading sequence, and the fourth frequency domain data segment is a frequency domain data segment obtained through spreading based on a fourth spreading sequence. The third spreading sequence is orthogonal to the first spreading sequence, and the fourth spreading sequence is orthogonal to the second spreading sequence.

According to a fourth aspect, a communication apparatus is provided, and includes a processing unit and a transceiver unit.

The transceiver unit is configured to receive first frequency domain data on a transmission bandwidth. The first frequency domain data includes second frequency domain data transmitted on a first tone included in a first transmission bandwidth and third frequency domain data transmitted on a second tone included in a second transmission bandwidth. The processing unit is configured to parse, based on a first spreading sequence and a second spreading sequence, the second frequency domain data and the third frequency domain data that are included in the first frequency domain data. The first spreading sequence and the second spreading sequence are Golay complementary sequences.

In a possible implementation, the transceiver unit is specifically configured to obtain the first frequency domain data by using a first spatial stream. The transceiver unit is further configured to obtain fourth frequency domain data by using a second spatial stream. The first frequency domain data is orthogonal to the fourth frequency domain data.

In a possible implementation, the processing unit is further configured to parse the fourth frequency domain data based on the first spreading sequence and the second spreading sequence.

In a possible implementation, the processing unit is further configured to parse the fourth frequency domain data based on a third spreading sequence and a fourth spreading sequence, where the third spreading sequence and the fourth spreading sequence are Golay complementary sequences, the third spreading sequence is orthogonal to the first spreading sequence, and the fourth spreading sequence is orthogonal to the second spreading sequence.

According to a fifth aspect, a communication apparatus is provided. The communication apparatus may be the communication apparatus in any one of the possible implementations of the third aspect and the fourth aspect in the foregoing embodiments, or a chip disposed in the communication apparatus in any one of the third aspect and the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first apparatus or the second apparatus in any one of the possible implementations of the first aspect and the second aspect.

It should be understood that the communication interface may be implemented by using an antenna, a feeder, a codec, and the like in the communication apparatus. Alternatively, if the communication apparatus is a chip disposed in the communication apparatus, the communication interface may be an input/output interface of the chip, for example, an input/output pin. The communication apparatus may further include a transceiver, used by the communication apparatus to communicate with another device.

According to a sixth aspect, an embodiment of this application provides a chip system. The chip system includes a processor, and may further include a memory, configured to implement the method performed by the terminal device or the network device in any one of the possible implementations of the first aspect and the second aspect. In a possible implementation, the chip system further includes a memory, configured to store program instructions and/or data. The chip system may include a chip, or may include a chip and another discrete device.

According to a seventh aspect, this application provides a computer-readable storage medium. The computer-readable storage medium stores a computer program or instructions. When the computer program or the instructions are run, the method performed by the first apparatus or the second apparatus in the foregoing aspects is implemented.

According to an eighth aspect, a computer program product is provided. The computer program product includes computer program code or instructions. When the computer program code or the instructions are run, the method performed by the first apparatus or the second apparatus in the foregoing aspects is implemented.

According to a ninth aspect, a communication apparatus is provided. The communication apparatus includes a unit or a module for performing the method in the foregoing aspects.

According to a tenth aspect, a chip system is provided, and includes a logic circuit and an input/output interface. The logic circuit is configured to perform the method performed by the first apparatus or the second apparatus. The input/output interface is configured to communicate with another apparatus.

According to an eleventh aspect, a system is provided, and includes at least one first apparatus for performing any one of the possible implementations of the first aspect and at least one second apparatus for performing any one of the possible implementations of the second aspect.

For beneficial effects of the second aspect to the eleventh aspect and the implementations thereof, refer to the descriptions of beneficial effects of the method in the first aspect and the implementations thereof.

### BRIEF DESCRIPTION OF DRAWINGS

FIG. 1 is a diagram of a communication system according to an embodiment of this application;
FIG. 2 is a diagram of a data processing procedure;
FIG. 3 is an example flowchart of a data transmission method according to an embodiment of this application;
FIG. 4 is an example flowchart of another data transmission method according to an embodiment of this application;
FIG. 5 is a diagram in which data is mapped to tones according to an embodiment of this application;
FIG. 6 is a diagram of a simulation result according to an embodiment of this application;
FIG. 7 is a diagram of a communication apparatus according to an embodiment of this application;
FIG. 8 is a diagram of another communication apparatus according to an embodiment of this application;
FIG. 9 is a diagram of another communication apparatus according to an embodiment of this application; and
FIG. 10 is a diagram of another communication apparatus according to an embodiment of this application.

### DESCRIPTION OF EMBODIMENTS

For ease of understanding technical solutions provided in embodiments of this application, the following explains and describes technical terms in embodiments of this application.
(1) Orthogonal frequency division multiplexing (orthogonal frequency division multiplexing, OFDM) is a type of multi-carrier modulation (multi-carrier modulation, MCM). A main idea of the OFDM is dividing a channel into several orthogonal subchannels, converting a high-rate data signal into parallel low-rate data sub-streams, and modulating the data sub-streams to the subchannels for transmission.
(2) A peak-to-average power ratio (peak-to-average power ratio, PAPR) is a ratio of peak power to average power of a signal, and is expressed in decibels (dB). The PAPR is usually measured for a transmitted signal in an OFDM system. A low PAPR is required for effective improvement of system performance.

The technical solutions provided in embodiments of this application are described below with reference to the accompanying drawings.

Embodiments of this application are applicable to a WLAN scenario, for example, applicable to the Institute of Electrical and Electronics Engineers (Institute of Electrical and Electronics Engineers, IEEE) 802.11 system standard, for example, an 802.11a/b/g, 802.11n, 802.11ac, or 802.11ax standard, a next generation thereof, for example, an 802.11be standard, Wi-Fi 7, or extremely high throughput (extremely high throughput, EHT), 802.11ad, 802.11ay, 802.11bf, a next generation of 802.11be, for example, Wi-Fi 8, or a further next-generation standard. Alternatively, embodiments of this application are applicable to a wireless local area network system, for example, an internet of things (internet of things, IoT) network or a vehicle-to-everything (Vehicle to X, V2X) network. Certainly, embodiments of this application are further applicable to another possible communication system, for example, an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN starts from the 802.11a/g standard, and evolves through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

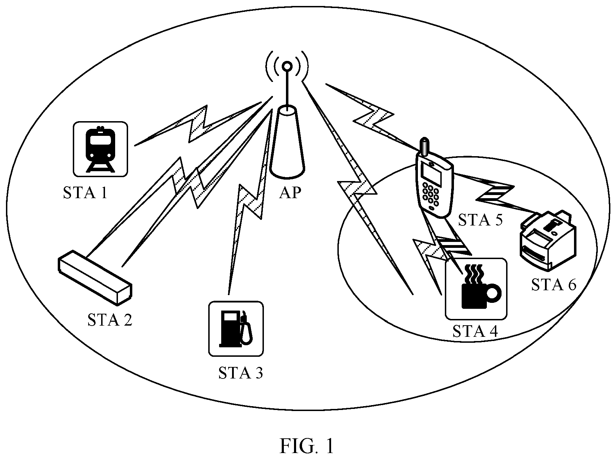

FIG. 1 is a diagram of a network architecture of a WLAN to which an embodiment of this application is applicable. In FIG. 1, the following is used as an example: The WLAN includes one wireless access point (access point, AP) and two stations (stations, STAs). The STA associated with the AP can receive a radio frame sent by the AP, and can also send a radio frame to the AP. In addition, embodiments of this application are also applicable to communication between APs. For example, the APs may communicate with each other through a distributed system (distributed system, DS). Embodiments of this application are also applicable to communication between STAs. It should be understood that quantities of APs and STAs in FIG. 1 are merely examples. There may be more or less APs and STAs.

The access point may be an access point through which a terminal device (for example, a mobile phone) accesses a wired (or wireless) network, and is mainly deployed at home, in a building, and in a park, with a typical coverage radius ranging from dozens of meters to hundreds of meters. Certainly, the access point may alternatively be deployed outdoors. The access point is equivalent to a bridge that connects a wired network and a wireless network, and is mainly used to connect various wireless network clients together and then connect the wireless network to the Ethernet. Specifically, the access point may be a terminal device (for example, a mobile phone) or a network device (for example, a router) with a Wi-Fi chip, or may be a wireless communication chip, a wireless sensor, a wireless communication terminal, or the like that has an access point function. The access point may be a device that supports the 802.11be standard. Alternatively, the access point may be a device that supports a plurality of wireless local area network (wireless local area network, WLAN) standards of the 802.11 family such as 802.11ax, 802.11ac, 802.11ad, 802.11ay, 802.11n, 802.11g, 802.11b, 802.11a, and a next generation of 802.11be.

The station may be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication device, a computer, or the like that supports a Wi-Fi communication function. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and a next generation of 802.11be.

For example, the access point and the station may be devices used in an internet of vehicles, internet of things nodes or sensors in an internet of things (IoT, internet of things), smart cameras, smart remote controls, or smart water or electricity meters in a smart home, sensors in a smart city, or the like.

The AP and the STA in embodiments of this application may be an AP and a STA that are applicable to the IEEE 802.11 system standard. The AP is an apparatus that is deployed in a wireless communication network and that provides a wireless communication function for the STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

The WLAN has evolved through many generations. Currently, 802.11ax supports the following bandwidth configurations: 20 MHz, 40 MHz, 80 MHz, 160 MHz, and 80+80 MHz. A difference between 160 MHz and 80+80 MHz lies in that 160 MHz is a contiguous band, while two 80-MHz bands in 80+80 MHz may be non-contiguous. In 802.11be, configurations such as 240 MHz/160+80 MHz and 320 MHz/160+160 MHz are supported.

A main feature of 802.11bn is to provide ultra-high reliability, for example, improve a signal-to-interference-plus-noise ratio (signal-to-interference-plus-noise ratio, SINR) of data transmission, and reduce a loss rate of data packets. To achieve the objective, a lower coding rate may be used to improve reliability of data transmission. This necessitates design of a new coding scheme, which performs poorly in complexity and compatibility. A simpler manner is to duplicate data obtained after coding and modulation, so that reliability of data transmission is improved through simple duplication. However, because most 802.11 standards employ an OFDM modulation scheme, direct duplication in frequency domain leads to a high PAPR of a time domain signal. Such a high-PAPR signal is usually undesirable because it degrades performance of an analog circuit. The high-PAPR signal requires a wide range of dynamic linearity of the analog circuit. This usually leads to the use of expensive devices, higher power consumption, and lower efficiency. For example, a power amplifier needs to operate with greater backoff to maintain linearity. In addition, non-linear distortion and out-of-band interference are introduced, which severely affects performance of a communication system. Therefore, generation of the high-PAPR signal usually needs to be avoided.

A commonly used method is to perform phase rotation on each duplicated signal. To reduce complexity, there are generally only two types of rotation: 0-degree rotation and 180-degree rotation. To be specific, each piece of duplicated data is multiplied by 1 or -1 to find an optimal rotation factor sequence, so that a duplicated signal obtained after rotation has a low PAPR. Because transmitted modulated data is random, and optimal rotation factors vary for different data, a rotation factor sequence usually needs to be found to minimize a median of PAPRs of the data. For example, frequency domain data before duplication is s̅, and the frequency domain data needs to be duplicated for eight times for transmission. In this case, frequency domain data after duplication is as follows:
[c₀s̅, c₁s̅ c₂s̅, c₃s̅ c₄s̅, c₅s̅ c₆s̅, c₇s̅]

cᵢ = ±1, and i=0, 1, 2, ..., 7. An optimal phase rotation sequence c̅ is found to obtain a low median of PAPRs of the data after duplication.

Although the foregoing solution can reduce the PAPR of the data to some extent, the optimal rotation factors of the data usually need to be searched for exhaustively based on tone division and a quantity of duplications, leading to a large computing amount, and there is no theoretical support. When the quantity of duplications further increases, there are too many possible rotation factor sequences, making this exhaustive method virtually impossible.

In view of this, embodiments of this application provide a data transmission method. In the method, a transmit end may generate first frequency domain data, and map the first frequency domain data to a tone included in a transmission bandwidth for transmission. The transmission bandwidth includes a first transmission bandwidth and a second transmission bandwidth, the first frequency domain data includes second frequency domain data mapped to a first tone included in the first transmission bandwidth and third frequency domain data mapped to a second tone included in the second transmission bandwidth, and the second frequency domain data is in mirror conjugation and alternating negation with the third frequency domain data.

According to the foregoing solution, the transmit end maps the frequency domain data to the first tone and the second tone respectively, and the frequency domain data is in mirror conjugation and alternating negation with each other. For example, the frequency domain data on the second tone may be obtained through alternating negation after conjugation is performed on the frequency domain data on the first tone. Alternating negation may be understood as performing negation on an element included in frequency domain data at an interval of a fixed quantity of elements, for example, at an interval of one element or two elements. Through mirror conjugation and alternating negation, the third frequency domain data on the second tone and the second frequency domain data on the first tone are no longer identically duplicated, so that a PAPR at the transmit end is reduced, and a computing amount is smaller in comparison with the exhaustive method.

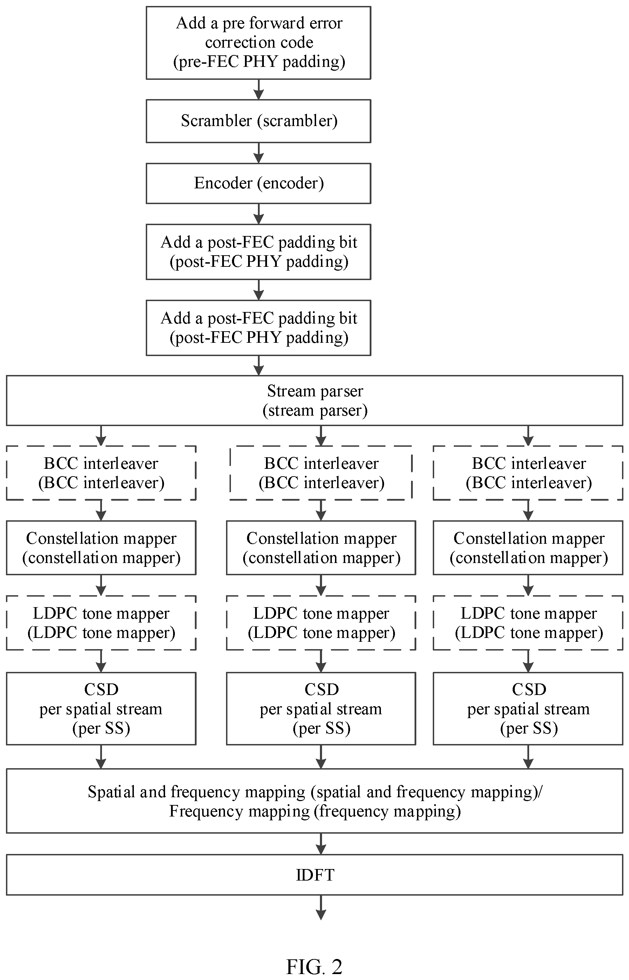

For ease of understanding of the technical solutions provided in embodiments of this application, the following describes a signal processing procedure of the transmit end. During downlink data transmission, an AP may send a physical protocol data unit (physical protocol data unit, PPDU) to a STA. During uplink transmission, the STA may send a PPDU to the AP. The PPDU may carry a data (data) field. Frequency domain data in embodiments of this application may be an entire PPDU, or may be a data field in a PPDU. FIG. 2 is used as an example to describe a module for processing a PPDU. For ease of description, downlink transmission is used as an example for description. Uplink transmission is similar, and details are not described again.

During downlink transmission, the AP may send a PPDU to a plurality of STAs, where the PPDU may be referred to as a multi-user PPDU (multi-user PPDU, MU PPDU), or the AP may send a PPDU to one STA. For one STA, the AP may construct a data field by using a process shown in FIG. 2.

As shown in FIG. 2, the AP may construct a service (service) field, and attach a physical service data unit (physical service data unit, PSDU) to the service field. The PSDU may be obtained by encoding a data packet transmitted from an upper layer of a physical layer, for example, a data link layer. The AP may add a pre (pre) forward error correction (forward error correction, FEC) code. Optionally, if the AP uses a binary convolutional code (binary convolutional code, BCC) for channel encoding and decoding, the AP may add a tail bit. The AP may use data to which the FEC is added as an input of a scrambler (scrambler), and scramble, by using the scrambler, the data to which the FEC is added. The AP may use an output of the scrambler as an input of an encoder (encoder). If the BCC is used, the AP performs BCC encoding by using the encoder. If low-density parity-check (low-density parity-check, LDPC) is used, the AP performs LDPC encoding by using the encoder. The AP adds a post-FEC (post-FEC) padding bit and a packet extension (packet extension, PE) field to an output of the encoder. The output of the encoder is used as an input of a stream parser (stream parser), and the output of the encoder is rearranged into a block by using the stream parser. Optionally, if the AP uses the BCC, an output of the stream parser may be used as an input of a BCC interleaver (BCC interleaver), and interleaving is performed on the output of the stream parser by using the BCC interleaver. If the AP uses the LDPC, an interleaving operation is not performed. In other words, a module, namely, the BCC interleaver, is bypassed. The AP may use an output of the BCC interleaver or the output of the stream parser as an input of a constellation mapper (constellation mapper), and map, by using the constellation mapper, the output of the BCC interleaver or the output of the stream parser to a constellation point of binary phase shift keying (binary phase shift keying, BPSK), binary phase shift keying-dual carrier modulation (binary phase shift keying-dual carrier modulation, BPSK-DCM), quadrature phase shift keying (quadrature phase shift keying, QPSK), 16-quadrature amplitude modulation (quadrature amplitude modulation, QAM), 64-QAM, 256-QAM, 1024-QAM, or 4096-QAM. Optionally, if the AP uses the LDPC encoding, the AP may use an output of the constellation mapper as an input of an LDPC tone (tone) mapper, and perform LDPC tone mapping on all LDPC encoded streams by using the LDPC tone mapper. If the AP uses the BCC, there is no need to perform tone mapper (tone mapping).

The AP uses data of each spatial stream as an input of cyclic shift diversity (cyclic shift diversity, CSD), and applies CSD to each spatial stream. The AP may perform spatial and frequency mapping (spatial and frequency mapping) on data output by the CSD. The AP may calculate inverse discrete Fourier transform (inverse discrete Fourier transform, IDFT) for data obtained through spatial and frequency mapping, and generate and send a radio frequency signal.

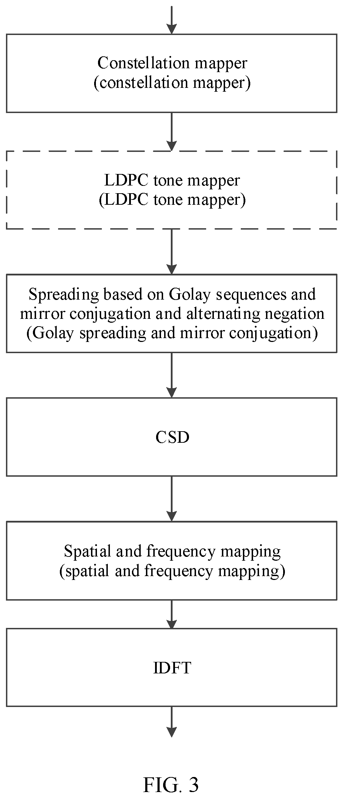

The following describes a data transmission method provided in embodiments of this application. FIG. 3 is an example flowchart of a data transmission method according to an embodiment of this application. The following operations may be included. In the embodiment shown in FIG. 3, a transmit end may be a STA or an AP, and a receive end may be a STA or an AP. For example, when the transmit end is an AP, the receive end may be an AP or a STA. For another example, when the transmit end is a STA, the receive end may be an AP or a STA.

The transmit end may perform spreading based on Golay complementary sequences and mirror conjugation and alternating negation on data output by an LDPC tone mapper or a constellation mapper, to generate first frequency domain data. For example, the transmit end performs, based on a first spreading sequence, spreading on the data output by the LDPC tone mapper or the constellation mapper, to obtain a first frequency domain data segment, and performs, based on a second spreading sequence, spreading on the data output by the LDPC tone mapper or the constellation mapper, to obtain a second frequency domain data segment. The first spreading sequence and the second spreading sequence are Golay complementary sequences.

For example, the first spreading sequence a̅ = [a₀, a₁, ..., a_{K-1}], and the second spreading sequence b̅ = [b₀, b₁, ... , b_{K-1}].

For a sequence x̅ with a length of K, an aperiodic autocorrelation function of the sequence is defined as follows: ${R}_{\vec{x}} \left(k\right) = {\sum }_{i = 0}^{K - i - 1} {x}_{i} {x}_{i + k}$

If elements of the sequences a̅ and b̅ are 1 or -1, and aperiodic autocorrelation functions of the sequences satisfy: ${R}_{\vec{a}} \left(k\right) + {R}_{\vec{b}} \left(k\right) = \left\{\begin{matrix}2 K , & if k = 0 \\ 0 , & otherwise\end{matrix}\right.$ the sequences a̅ and b̅ are one pair of Golay complementary pair sequences.

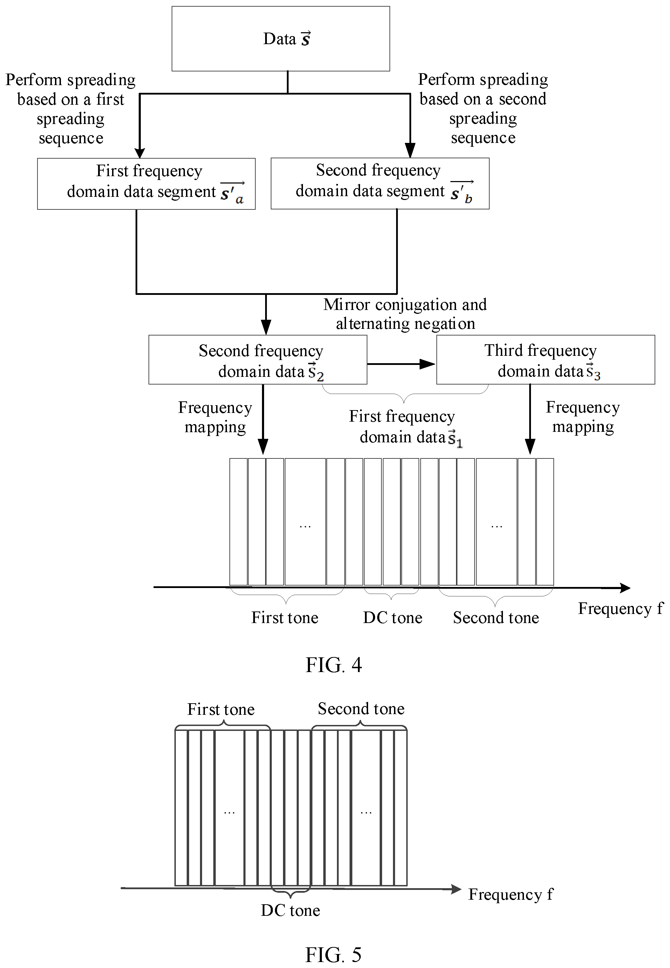

Refer to FIG. 4. In the foregoing example, the transmit end may split the data *̅s̅*̅ output by the LDPC tone mapper or the constellation mapper into two segments, that is: $\vec{s} = \left[\vec{{s}_{a}}, \vec{{s}_{b}}\right]$

The transmit end may perform spreading on *̅*̅*̅s̅*̅*̅ₐ̅*̅ based on the first spreading sequence a̅, and perform spreading on *̅*̅*̅s̅*̅*̅_̅{̅b̅}̅*̅ based on the second spreading sequence b. The first frequency domain data segment *̅*̅*̅s̅*̅*̅'̅ₐ̅*̅=[a₀s̅ₐ̅, a₁s̅ₐ̅, a₂s̅ₐ̅, ... , a_{K-1}s̅ₐ̅,], and the second frequency domain data segment *̅*̅*̅s̅*̅*̅'̅_̅{̅b̅}̅*̅ = [b₀s̅_̅{̅b̅}̅, b₁s̅_̅{̅b̅}̅, b₂s̅_̅{̅b̅}̅, ... , b_{K-1}s̅_̅{̅b̅}̅].

According to the foregoing solution, spreading may be performed on the first frequency domain data segment and the second frequency domain data segment based on the Golay complementary sequences, so that data obtained through spreading has a low PAPR.

In this embodiment of this application, as shown in FIG. 4, the transmit end may combine the first frequency domain data segment obtained through spreading and the second frequency domain data segment obtained through spreading into second frequency domain data. For example, the transmit end may splice the first frequency domain data segment and the second frequency domain data segment, to obtain the second frequency domain data s̅₂ = [a₀s̅ₐ̅) a₁s̅ₐ̅, a₂s̅ₐ̅, ... , a_{K-1}s̅ₐ̅, b₀s̅_̅{̅b̅}̅, b₁s̅_̅{̅b̅}̅, b₂s̅_̅{̅b̅}̅, ... , b_{K-1}s̅_̅{̅b̅}̅]. For another example, the transmit end may alternately splice the first frequency domain data segment and the second frequency domain data segment, to obtain the second frequency domain data s̅₂ = [a₀s̅ₐ̅) b₀s̅_̅{̅b̅}̅, a₁s̅ₐ̅, b₁s̅_̅{̅b̅}̅, a₂s̅ₐ̅, b₂s̅_̅{̅b̅}̅, ..., a_{K-1}s̅ₐ̅, b_{K-1}s̅_̅{̅b̅}̅].

It should be noted that, in embodiments of this application, a manner in which the transmit end obtains the second frequency domain data based on the first frequency domain data segment and the second frequency domain data segment is not specifically limited. A person skilled in the art may obtain the second frequency domain data based on the first frequency domain data segment and the second frequency domain data segment in another manner. For example, the second frequency domain data ${\vec{s}}_{2} = \left[{a}_{0}\vec{{s}_{a}},{a}_{1}\vec{{s}_{a}},{b}_{0}\vec{{s}_{b}},{b}_{1}\vec{{s}_{b}},{a}_{2}\vec{{s}_{a}},{a}_{3}\vec{{s}_{a}}{, b}_{2}\vec{{s}_{b}},{b}_{3}\vec{{s}_{b}},…,{a}_{K - 2}\vec{{s}_{a}},{a}_{K - 1}\vec{{s}_{a} , {b}_{K - 2} \vec{{s}_{b}} , {b}_{K - 1} \vec{{s}_{b}}}\right]$ .

As shown in FIG. 4, the transmit end may obtain third frequency domain data s̅₃ through alternating negation after performing conjugation on the second frequency domain data s̅₂. For example, the second frequency domain data may be represented by a sequence s̅₂. In this case, the third frequency domain data s̅₃ may satisfy the following formula: ${\vec{s}}_{3} \left(k\right) = conj \left({\vec{s}}_{2}\left(L-k\right)\right) {\left(-1\right)}^{k} , k ∈ \left[0,L-1\right]$

L indicates a length of the sequence ***̅s̅*̅**, and s̅₃(k) indicates a k^{th} element in the sequence s̅₃.

In Formula (3), conj(s̅₂(L - k)) may be understood as performing conjugation on the second frequency domain data, and (-1)^{k} may be understood as performing alternating negation on a result obtained through conjugation. Alternating negation may be understood as performing negation on an element included in the second frequency domain data at an interval of a fixed quantity of elements, for example, at an interval of one element or two elements. In Formula (1), negation at an interval of one element is used as an example for description.

As shown in FIG. 4, the second frequency domain data s̅₂ and the third frequency domain data s̅₃ together may be referred to as the first frequency domain data s̅₁. In other words, the first frequency domain data s̅₁ includes two parts: the second frequency domain data s̅₂ and the third frequency domain data s̅₃. The transmit end maps the first frequency domain data s̅₁ to a tone included in a transmission bandwidth for transmission. The transmission bandwidth may include a first transmission bandwidth and a second transmission bandwidth. For example, the transmit end may map the second frequency domain data s̅₂ to a first tone included in the first transmission bandwidth, and map the third frequency domain data s̅₃ to a second tone included in the second transmission bandwidth, to form to-be-sent frequency domain data [***̅s̅*̅**₂, ***̅s̅*̅**₃]. It should be noted that, mapping the frequency domain data to the tone may be understood as that the tone bears a corresponding value in the frequency domain data.

For example, as shown in FIG. 3 and FIG. 4, the transmit end may perform spatial mapping (spatial mapping) and frequency mapping (frequency mapping) on the first frequency domain data (spatial mapping and frequency mapping are shown in the figure), to obtain to-be-sent frequency domain data. Mapping the first frequency domain data s̅₁ to the tone included in the transmission bandwidth may be understood as frequency mapping. The transmit end may perform inverse discrete Fourier transform (inverse discrete Fourier transform, IDFT) on the to-be-sent frequency domain data obtained through spatial mapping and frequency mapping, and generate and send a radio frequency signal.

According to the foregoing solution, the third frequency domain data is in mirror conjugation and alternating negation with the second frequency domain data, but the second frequency domain data and the third frequency domain data bear same information. This may be considered as a manner of data duplication. The transmit end maps the data duplicated in frequency domain to the first tone and the second tone respectively, and the duplicated frequency domain data is in mirror conjugation and alternating negation with each other. Therefore, the frequency domain data on the first tone and the frequency domain data on the second tone are no longer identically duplicated, so that a PAPR at the transmit end can be reduced.

In a possible implementation, every 80-MHz transmission bandwidth includes 1024 tones, including a guard tone (guard tone), a direct current tone (DC tone), a pilot tone (pilot tone), a null subcarrier (null subcarrier), a data tone/subcarrier (data tone/subcarrier), and the like. In this embodiment of this application, neither of the first tone and the second tone includes the guard tone, the DC tone, the pilot tone, or the null subcarrier. In other words, in this embodiment of this application, the first tone and the second tone include data tones corresponding to a resource block (resource block, RU) or a multi-resource block (multi-resource block, MRU) allocated by the AP for the STA.

The transmit end may map the second frequency domain data to the first tone and the third frequency domain data to the second tone for sending, and a value of a remaining tone (for example, the DC tone) may be set to 0. For example, with reference to FIG. 5, the transmission bandwidth may include a plurality of tones. It may be understood that, frequencies of tones in FIG. 5 may be in ascending order from left to right. In other words, a leftmost tone has a lowest frequency, and a rightmost tone has a highest frequency. For example, the first tone is a data tone in a low band part of the transmission bandwidth, that is, a data tone in tones included in an RU or MRU in the low band part of the transmission bandwidth, and the second tone is a data tone in a high band part of the transmission bandwidth, that is, a data tone in tones included in an RU or MRU in the high band part of the transmission bandwidth.

As shown in FIG. 5, for an OFDM system, an odd quantity of tones are reserved in a center of the transmission bandwidth as DC tones to transmit no data. In this case, the transmit end may map the second frequency domain data s̅₂ to a low-frequency tone (the first tone) on a left side of the DC tones in the transmission bandwidth, and map the third frequency domain data s̅₃ to a high-frequency tone (the second tone) on a right side of the DC tones. Conversely, the transmit end may map the third frequency domain data s̅₃ to the low-frequency tone (the first tone) on the left side of the DC tones in the transmission bandwidth, and map the second frequency domain data s̅₂ to the high-frequency tone (the second tone) on the right side of the DC tones. For example, the transmit end may map the second frequency domain data ***̅s̅*̅**₂ to the first tone included in the transmission bandwidth, and map the third frequency domain data ***̅s̅*̅**₃ to the second tone included in the transmission bandwidth, to form the to-be-sent frequency domain data [s̅₂, 0,0,0, s̅₃].

The transmit end performs spatial mapping and frequency mapping on the to-be-sent first frequency domain data, to obtain the to-be-sent frequency domain data, then performs IDFT for transformation to time domain, and adds a cyclic prefix (cyclic prefix, CP) for sending.

According to the foregoing solution, the second frequency domain data is mapped to the first tone, and the third frequency domain data is mapped to the second tone, so that impact of the DC tones on data can be effectively avoided, to further reduce a PAPR of the data.

It should be noted that the foregoing example is described by using an example of three DC tones. During transmission, there may be another odd quantity of DC tones, for example, one, five, or seven DC tones. This is not specifically limited in this application.

In this embodiment of this application, the transmit end may perform the foregoing operation of generating the first frequency domain data by using a module, and the module may be named Golay spreading and mirror conjugation (Golay spreading and mirror conjugation), frequency domain duplication (frequency domain duplication), or the like. This is not specifically limited in this application. If the AP uses a BCC, an input of the module may be an output of the constellation mapper. If the AP uses LDCP, the input of the module may be an output of the LDPC tone mapper. The transmit end uses an output of the module as an input of CSD.

The receive end may obtain the first frequency domain data. For example, after receiving a time domain signal sent by the transmit end on the transmission bandwidth, the receive end may use DFT to transform the time domain signal to frequency domain, to obtain the first frequency domain data on the transmission bandwidth. The first frequency domain data includes the second frequency domain data mapped to the first tone in the transmission bandwidth and the third frequency domain data mapped to the second tone in the transmission bandwidth. The receive end parses the second frequency domain data and the third frequency domain data based on a first spreading sequence and a second spreading sequence respectively. Because the second frequency domain data is in mirror conjugation and alternating negation with the third frequency domain data, the receive end may perform a restoration operation on the third frequency domain data on the second tone. For example, the receive end may perform alternating negation after performing conjugation on the third frequency domain data on the second tone, and then perform parsing based on the second spreading sequence.

In a possible case, the second frequency domain data may include the first frequency domain data segment and the second frequency domain data segment. The first frequency domain data segment is a frequency domain data segment obtained through spreading based on the first spreading sequence, and the second frequency domain data segment is a frequency domain data segment obtained through spreading based on the second spreading sequence. The first spreading sequence and the second spreading sequence are Golay complementary sequences. The receive end may perform a restoration operation on the second frequency domain data based on the first spreading sequence and the second spreading sequence. For example, the receive end may perform, based on the first spreading sequence and the second spreading sequence, restoration on the first frequency domain data segment and the second frequency domain data segment that are obtained through spreading, to obtain frequency domain data segments before spreading.

Similarly, because the third frequency domain data is in mirror conjugation and alternating negation with the second frequency domain data, the receive end may perform, based on the first spreading sequence and the second spreading sequence, a restoration operation on the third frequency domain data obtained through alternating negation after conjugation, to obtain a frequency domain data segment before spreading.

It may be understood that the first spreading sequence and the second spreading sequence that are used by the receive end are the same as the first spreading sequence and the second spreading sequence that are used by the transmit end. The first spreading sequence and the second spreading sequence may be indicated by the transmit end, may be preconfigured, or may be predefined in a protocol. This is not specifically limited in this application.

For example, s̅ is a QPSK sequence with a length of 124 for simulation verification. It is assumed that K is equal to 4, and there are seven direct current tones. In this case, frequency domain data generated in frequency domain duplication mode in a related technology, that is, frequency domain data formed through frequency domain duplication and phase rotation, is as follows:
[c₀s̅, c₁s̅ c₂s̅, c₃s̅, 0, 0, 0, 0, 0, 0, 0, c₄s̅, c₅s̅ c₆s̅, c₇s̅]

cᵢ = ±1, and i=0, 1, 2, ..., 7. An optimal rotation factor obtained through traversal search is as follows: c̅ = [1 - 1 - 1 1 1 1 1 1].

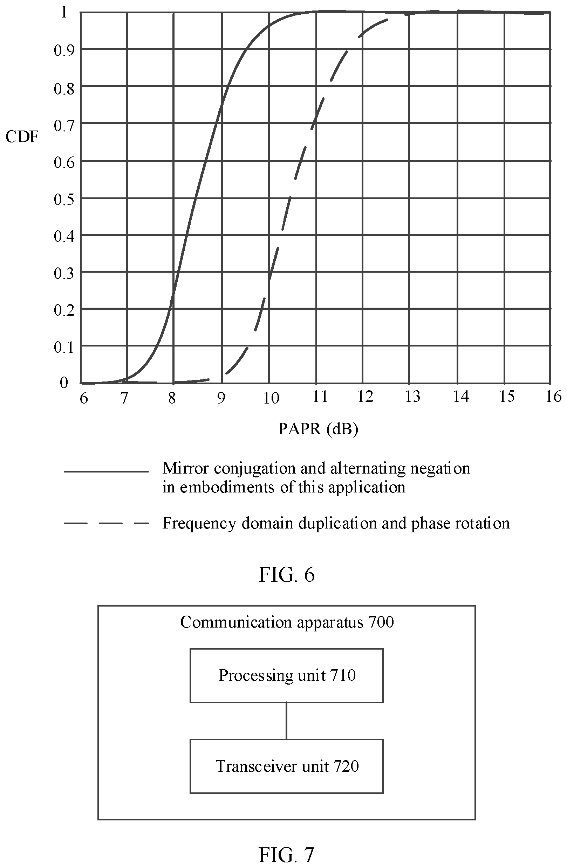

With the use of the technical solution provided in this embodiment of this application, the first spreading sequence may be a̅ = [1, -1, 1, 1], and the second spreading sequence may be b = [1, -1, -1, -1]. QPSK modulated data s̅ is randomly generated for one million times, and statistics on calculated cumulative distribution functions (cumulative distribution function, CDF) of PAPRs of the generated data in the two solutions are collected. A simulation result may be shown in FIG. 6.

FIG. 6 is a diagram of a simulation result of PAPRs in the technical solution of mirror conjugation and alternating negation in this embodiment of this application and the technical solution of frequency domain duplication and phase rotation in the related technology in an 80-MHz bandwidth. It can be learned that, in comparison with duplication of the frequency domain data on the first tone and the technical solution of frequency domain duplication and phase rotation, obtaining the frequency domain data on the second tone through mirror conjugation and alternating negation causes a median of PAPRs to have a gain greater than 2 dB, so that a PAPR of data can be effectively reduced.

In embodiments of this application, the technical solution of duplicating data in frequency domain is described by using the embodiment shown in FIG. 3. The third frequency domain data is in mirror conjugation and alternating negation with the second frequency domain data, but the second frequency domain data and the third frequency domain data bear same information. This may be considered as a manner of data duplication.

In another embodiment of this application, data may alternatively be duplicated in spatial domain, to improve data reliability. That the data is duplicated in spatial domain may mean that data that carries same information is sent by using a plurality of spatial streams, to improve reliability of data transmission. However, when the plurality of spatial streams are used to send highly-correlated data, unnecessary beamforming effect is caused. Therefore, correlation between the data of the plurality of spatial streams may be as low as possible, to avoid impact caused by beamforming. A person skilled in the art may understand that the foregoing technical solutions of duplicating data in frequency domain and duplicating data in spatial domain may be superimposed to be implemented in a same processing solution, or certainly, only one of the technical solutions may be used according to a requirement.

In the solution of duplicating data in spatial domain, for example, the transmit end may send, by using a plurality of spatial streams, frequency domain data that carries same information as the to-be-sent frequency domain data, and frequency domain data sent by using different spatial streams is orthogonal to each other. An example in which the transmit end sends frequency domain data by using two spatial streams is used. The transmit end may send the to-be-sent frequency domain data by using a first spatial stream, and send fourth frequency domain data by using a second spatial stream. The to-be-sent frequency domain data is orthogonal to the fourth frequency domain data.

In a possible implementation, the fourth frequency domain data may be in a reverse order of the to-be-sent frequency domain data. For example, the to-be-sent frequency domain data= [s̅₂, 0,0,0, s̅₃] , and the transmit end may determine the reverse order of the to-be-sent frequency domain data, to obtain s̅₄ = reverse(reverse)([s̅₂, 0,0,0, s̅₃]). It should be noted that the reverse order may be understood as reversing an order of the frequency domain data. For example, assuming [a0, a1, a2, a3, a4, a5], then s̅₄ =[a5, a4, a3, a2, a1, a0]. Optionally, reverse(reverse)([s̅₂]) included in the fourth frequency domain data may be mapped to the first tone and (reverse)([s̅₃]) may be mapped to the second tone for transmission, and a remaining tone may be set to 0.

In another possible implementation, the fourth frequency domain data may include fifth frequency domain data and sixth frequency domain data. The fifth frequency domain data segment may be opposite to the second frequency domain data, and the sixth frequency domain data may be the same as the third frequency domain data. For example, the to-be-sent frequency domain data=[s̅₂, 0,0,0, s̅₃] , and the transmit end may determine that the fifth frequency domain data obtained by performing negation on the second frequency domain data s̅₂ is that s̅₅=[-s̅₂], and the sixth frequency domain data s̅₆=[s̅₃]. In this case, the fourth frequency domain data s̅₄ = [s̅₅, 0,0,0, s̅₆]=[-s̅₂, 0,0,0, s̅₃]. It should be noted that negation may be understood as multiplying each value by -1. For example, s̅₂=[a0, a1, a2, a3, a4, a5], and in this case, s̅₅=[-s̅₂]=[-a0, -a1, -a2, -a3, -a4, -a5]. Optionally, the fifth frequency domain data included in the fourth frequency domain data may be mapped to the first tone and the sixth frequency domain data may be mapped to the second tone for transmission, and a remaining tone may be set to 0.

In still another possible implementation, the fourth frequency domain data includes fifth frequency domain data and sixth frequency domain data. The fifth frequency domain data may be mapped to the first tone and the sixth frequency domain data may be mapped to the second tone for transmission, and a remaining tone may be set to 0. In this possible implementation, the fifth frequency domain data may be the same as the second frequency domain data, and the sixth frequency domain data may be opposite to the third frequency domain data. In other words, the fourth frequency domain data s̅₄=[s̅₃, 0,0,0, -s̅₂]. In other words, the fourth frequency domain data s̅₄ may be in a reverse order of [-s̅₂, 0,0,0, s̅₃] . That is, s̅₄ = reverse(reverse)([-s̅₂, 0,0,0,s̅₃]).

According to the foregoing solution, different mutually-orthogonal data may be obtained by transforming the to-be-sent frequency domain data, so that the mutually-orthogonal data that carries same information can be sent by using different spatial streams. This can improve data reliability, avoid unnecessary beamforming effect, and improve transmission performance.

In another possible implementation, a third spreading sequence and a fourth spreading sequence that are orthogonal to the first spreading sequence and the second spreading sequence may be selected, to determine the fourth frequency domain data. For example, the fourth frequency domain data includes fifth frequency domain data and sixth frequency domain data, and the fifth frequency domain data is in mirror conjugation and alternating negation with the sixth frequency domain data. The fifth frequency domain data may include a third frequency domain data segment and a fourth frequency domain data segment, the third frequency domain data segment is a frequency domain data segment obtained through spreading based on the third spreading sequence, and the fourth frequency domain data segment is a frequency domain data segment obtained through spreading based on the fourth spreading sequence. It should be noted that the third spreading sequence is orthogonal to the first spreading sequence, the fourth spreading sequence is orthogonal to the second spreading sequence, and the third spreading sequence and the fourth spreading sequence are Golay complementary sequences. It may be understood that lengths of the first spreading sequence, the second spreading sequence, the third spreading sequence, and the fourth spreading sequence are the same. For example, a̅ = [1, -1, 1, 1] , b̅ = [1, -1, -1, -1] , g̅ = [1,1, 1, -1], h̅ = [1,1, -1,1], and the four spreading sequences have the same length and are orthogonal to each other.

In this embodiment of this application, for generating the third frequency domain data segment by the transmit end, refer to the implementation of generating the first frequency domain data segment, and a spreading sequence used to generate the third frequency domain data segment may be the third spreading sequence h̅; and for generating the fourth frequency domain data segment, refer to the implementation of generating the second frequency domain data segment, and a spreading sequence used to generate the fourth frequency domain data segment may be the fourth spreading sequence g̅. In this way, the transmit end can determine the fifth frequency domain data included in the fourth frequency domain data. Because the sixth frequency domain data is in mirror conjugation and alternating negation with the fifth frequency domain data, the transmit end may perform conjugation and alternating negation on the fifth frequency domain data according to Formula (1), to obtain the sixth frequency domain data.

According to the foregoing solution, the transmit end may construct more mutually-orthogonal frequency domain data based on various types of orthogonal complementary sequences, to support transmitting, by using more spatial streams, data that carries same information, so that reliability of data transmission is improved.

Communication apparatuses provided in embodiments of this application are described based on the following embodiments. FIG. 7 is a block diagram of a communication apparatus 700 according to an embodiment of this application. The communication apparatus 700 may correspondingly implement functions or steps implemented by the transmit end or the receive end in the foregoing method embodiments. The communication apparatus may include a processing unit 710 and a transceiver unit 720. Optionally, a storage unit may be further included. The storage unit may be configured to store instructions (code or a program) and/or data. The processing unit 710 and the transceiver unit 720 may be coupled to the storage unit. For example, the processing unit 710 may read the instructions (the code or the program) and/or the data in the storage unit, to implement a corresponding method. The foregoing units may be independently disposed, or may be partially or completely integrated.

Optionally, the transceiver unit 720 may include a sending unit and a receiving unit. The sending unit may be configured to perform all sending operations performed by the communication apparatus 700, and the receiving unit may be configured to perform all receiving operations performed by the communication apparatus 700.

In some possible implementations, the communication apparatus 700 can correspondingly implement behavior and functions of the transmit end or the like in the foregoing method embodiments. For example, the communication apparatus 700 may be the transmit end, or may be a component (for example, a chip or a circuit) used in the transmit end. The transceiver unit 720 may be configured to perform all receiving or sending operations performed by the transmit end in the embodiment shown in FIG. 3. The processing unit 710 is configured to perform all operations performed by the transmit end other than the receiving and sending operations in the embodiment shown in FIG. 3.

For example, the processing unit 710 is configured to generate first frequency domain data. The transceiver unit 720 is configured to map the first frequency domain data to a tone included in a transmission bandwidth for transmission. The transmission bandwidth includes a first transmission bandwidth and a second transmission bandwidth, the first frequency domain data includes second frequency domain data mapped to a first tone included in the first transmission bandwidth and third frequency domain data mapped to a second tone included in the second transmission bandwidth, and the second frequency domain data is in mirror conjugation and alternating negation with the third frequency domain data.

In some possible implementations, the communication apparatus 700 can correspondingly implement behavior and functions of the receive end in the foregoing method embodiments. For example, the communication apparatus 700 may be the receive end, or may be a component (for example, a chip or a circuit) used in the receive end. The transceiver unit 720 may be configured to perform all receiving or sending operations performed by the receive end in the embodiment shown in FIG. 3. The processing unit 710 is configured to perform all operations performed by the receive end other than the receiving and sending operations in the embodiment shown in FIG. 3.

For example, the transceiver unit 720 is configured to receive first frequency domain data on a transmission bandwidth. The first frequency domain data includes second frequency domain data transmitted on a first tone included in a first transmission bandwidth and third frequency domain data transmitted on a second tone included in a second transmission bandwidth. The processing unit 710 is configured to parse, based on a first spreading sequence and a second spreading sequence, the second frequency domain data and the third frequency domain data that are included in the first frequency domain data. The first spreading sequence and the second spreading sequence are Golay complementary sequences.

For operations performed by the processing unit 710 and the transceiver unit 720, refer to related descriptions in the foregoing method embodiments.

It should be understood that the processing unit 710 in this embodiment of this application may be implemented by a processor or a processor-related circuit component, and the transceiver unit 720 may be implemented by a transceiver, a transceiver-related circuit component, or a communication interface.

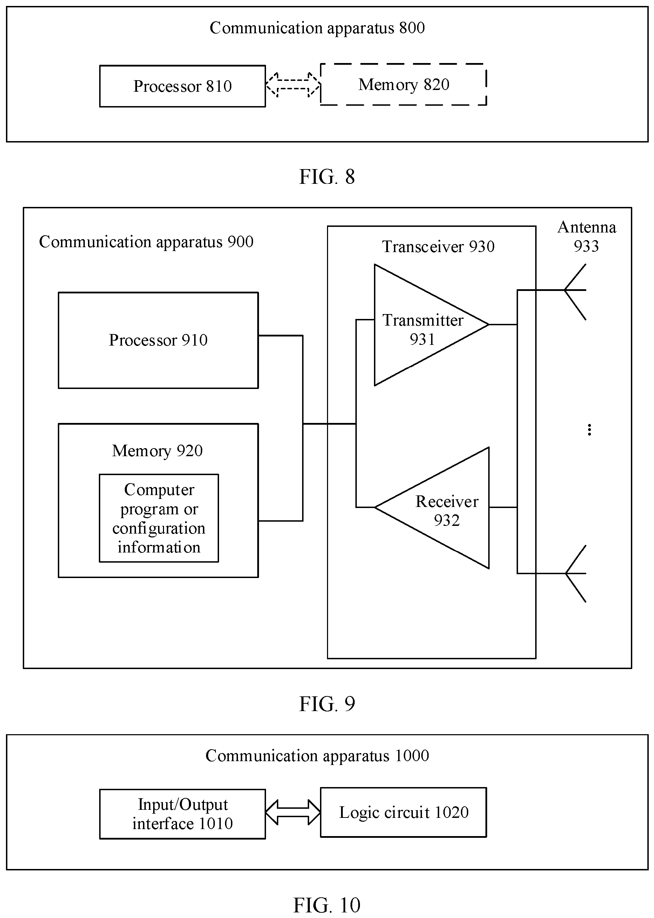

Based on a same concept, as shown in FIG. 8, an embodiment of this application provides a communication apparatus 800. The communication apparatus 800 includes a processor 810. Optionally, the communication apparatus 800 may further include a memory 820, configured to store instructions executed by the processor 810, or store input data needed by the processor 810 to run instructions, or store data generated after the processor 810 runs instructions. The processor 810 may implement the method shown in the foregoing method embodiments by using the instructions stored in the memory 820.

Based on a same concept, as shown in FIG. 9, an embodiment of this application provides a communication apparatus 900. The communication apparatus 900 may be a chip or a chip system. Optionally, in this embodiment of this application, the chip system may include a chip, or may include a chip and another discrete device.

The communication apparatus 900 may include at least one processor 910. The processor 910 is coupled to a memory. Optionally, the memory may be located inside the apparatus, or may be located outside the apparatus. For example, the communication apparatus 900 may further include at least one memory 920. The memory 920 stores a computer program, configuration information, a computer program or instructions, and/or data necessary for implementing any one of the foregoing embodiments. The processor 910 may execute the computer program stored in the memory 920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 910 may cooperate with the memory 920. In this embodiment of this application, a specific connection medium between a transceiver 930, the processor 910, and the memory 920 is not limited.

The communication apparatus 900 may further include the transceiver 930, and the communication apparatus 900 may exchange information with another device through the transceiver 930. The transceiver 930 may be a circuit, a bus, a transceiver, or any other apparatus that can be used for information exchange, or is referred to as a signal transceiver unit. As shown in FIG. 9, the transceiver 930 includes a transmitter 931, a receiver 932, and an antenna 933. In addition, when the communication apparatus 900 is a chip-type apparatus or a circuit, the transceiver in the communication apparatus 900 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 900 may be used in a transmit end. Specifically, the communication apparatus 900 may be a transmit end, or may be an apparatus that can support a transmit end in implementing functions of the transmit end in any one of the foregoing embodiments. The memory 920 stores a computer program, a computer program or instructions, and/or data necessary for implementing functions of the communication apparatus in any one of the foregoing embodiments. The processor 910 may execute the computer program stored in the memory 920, to complete the method performed by the transmit end in any one of the foregoing embodiments.

In a possible implementation, the communication apparatus 900 may be used in a receive end. Specifically, the communication apparatus 900 may be a receive end, or may be an apparatus that can support a receive end in implementing functions of the receive end in any one of the foregoing embodiments. The memory 920 stores a computer program, a computer program or instructions, and/or data necessary for implementing functions of the receive end in any one of the foregoing embodiments. The processor 910 may execute the computer program stored in the memory 920, to complete the method performed by the receive end in any one of the foregoing embodiments.

The communication apparatus 900 provided in this embodiment may be used in a transmit end to complete the method performed by the transmit end, or may be used in a receive end to complete the method performed by the foregoing receive end. Therefore, for technical effects that can be achieved, refer to the foregoing method embodiments. Details are not described herein again.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instruction or data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 10. Based on the foregoing embodiments, an embodiment of this application further provides another communication apparatus 1000, including an input/output interface 1010 and a logic circuit 1020. The input/output interface 1010 is configured to receive code instructions and transmit the code instructions to the logic circuit 1020. The logic circuit 1020 is configured to run the code instructions to perform the method performed by the transmit end or the receive end in any one of the foregoing embodiments.

Optionally, the input/output interface 1010 may be an interface on a chip, and the logic circuit 1020 may be one or more processors. Optionally, the one or more processors may be located inside the apparatus, or may be located outside the apparatus.

The following describes in detail operations performed by the communication apparatus used in a transmit end or a receive end.

In an optional implementation, the communication apparatus 1000 may be used in a transmit end to perform the method performed by the foregoing transmit end, specifically, for example, the method performed by the transmit end in the embodiment shown in FIG. 3.

For example, the logic circuit 1020 is configured to generate first frequency domain data. The input/output interface 1010 is configured to map the first frequency domain data to a tone included in a transmission bandwidth for transmission. The transmission bandwidth includes a first transmission bandwidth and a second transmission bandwidth, the first frequency domain data includes second frequency domain data mapped to a first tone included in the first transmission bandwidth and third frequency domain data mapped to a second tone included in the second transmission bandwidth, and the second frequency domain data is in mirror conjugation and alternating negation with the third frequency domain data.

The communication apparatus 1000 provided in this embodiment may be used in a transmit end to complete the method performed by the foregoing transmit end. Therefore, for technical effects that can be achieved, refer to the foregoing method embodiments. Details are not described herein again.

In an optional implementation, the communication apparatus 1000 may be used in a receive end to perform the method performed by the foregoing receive end, specifically, for example, the method performed by the receive end in the embodiment shown in FIG. 3.

For example, the input/output interface 1010 is configured to receive first frequency domain data on a transmission bandwidth. The first frequency domain data includes second frequency domain data transmitted on a first tone included in a first transmission bandwidth and third frequency domain data transmitted on a second tone included in a second transmission bandwidth. The logic circuit 1020 is configured to parse, based on a first spreading sequence and a second spreading sequence, the second frequency domain data and the third frequency domain data that are included in the first frequency domain data. The first spreading sequence and the second spreading sequence are Golay complementary sequences.

The communication apparatus 1000 provided in this embodiment may be used in a receive end to complete the method performed by the foregoing receive end. Therefore, for technical effects that can be achieved, refer to the foregoing method embodiments. Details are not described herein again.

Based on the foregoing embodiments, an embodiment of this application further provides a communication system. The communication system includes at least one communication apparatus used in a transmit end and at least one communication apparatus used in a receive end. For technical effects that can be achieved, refer to the foregoing method embodiments. Details are not described herein again.

Based on the foregoing embodiments, an embodiment of this application further provides a system. The communication system includes at least one receive end and a transmit end.

Based on the foregoing embodiments, an embodiment of this application further provides a computer-readable storage medium. The computer-readable storage medium stores a computer program or instructions. When the instructions are executed, the method performed by the transmit end or the method performed by the receive end in any one of the foregoing embodiments is implemented. The computer-readable storage medium may include any medium that can store program code, such as a USB flash drive, a removable hard disk, a read-only memory, a random access memory, a magnetic disk, or an optical disc.

To implement functions of the communication apparatuses in FIG. 7 to FIG. 10, an embodiment of this application further provides a chip, including a processor, configured to support the communication apparatus in implementing functions of the transmit end or the receive end in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer program or the instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto a computer or another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of the claims of this application and their equivalent technologies.

## Claims

1. A data transmission method, comprising:
generating first frequency domain data; and
mapping the first frequency domain data to a tone comprised in a transmission bandwidth for transmission, wherein the transmission bandwidth comprises a first transmission bandwidth and a second transmission bandwidth, the first frequency domain data comprises second frequency domain data mapped to a first tone comprised in the first transmission bandwidth and third frequency domain data mapped to a second tone comprised in the second transmission bandwidth, and the second frequency domain data is in mirror conjugation and alternating negation with the third frequency domain data.

2. The method according to claim 1, wherein the second frequency domain data comprises a first frequency domain data segment and a second frequency domain data segment, the first frequency domain data segment is a frequency domain data segment obtained through spreading based on a first spreading sequence, the second frequency domain data segment is a frequency domain data segment obtained through spreading based on a second spreading sequence, and the first spreading sequence and the second spreading sequence are Golay complementary sequences.

3. The method according to claim 1, wherein mapping the first frequency domain data to the tone comprised in the transmission bandwidth for transmission comprises:
sending, by using a first spatial stream, the first frequency domain data mapped to the tone;
and
the method further comprises:
sending fourth frequency domain data by using a second spatial stream, wherein
the first frequency domain data mapped to the tone is orthogonal to the fourth frequency domain data.

4. The method according to claim 3, wherein the fourth frequency domain data is in a reverse order of the first frequency domain data.

5. The method according to claim 3, wherein the fourth frequency domain data comprises fifth frequency domain data and sixth frequency domain data; and the fifth frequency domain data is opposite to the second frequency domain data; or the fifth frequency domain data is mapped to the first tone for transmission, the sixth frequency domain data is mapped to the second tone for transmission, the fifth frequency domain data is the same as the third frequency domain data, and the sixth frequency domain data is opposite to the first frequency domain data.

6. The method according to claim 3, wherein the second frequency domain data comprises a first frequency domain data segment and a second frequency domain data segment, the first frequency domain data segment is a frequency domain data segment obtained through spreading based on a first spreading sequence, the second frequency domain data segment is a frequency domain data segment obtained through spreading based on a second spreading sequence, and the first spreading sequence and the second spreading sequence are Golay complementary sequences;
the fourth frequency domain data comprises fifth frequency domain data and sixth frequency domain data, the fifth frequency domain data is in mirror conjugation and alternating negation with the sixth frequency domain data, the fifth frequency domain data comprises a third frequency domain data segment and a fourth frequency domain data segment, the third frequency domain data segment is a frequency domain data segment obtained through spreading based on a third spreading sequence, and the fourth frequency domain data segment is a frequency domain data segment obtained through spreading based on a fourth spreading sequence; and
the third spreading sequence is orthogonal to the first spreading sequence, and the fourth spreading sequence is orthogonal to the second spreading sequence.

7. A data transmission method, comprising:
receiving first frequency domain data on a transmission bandwidth, wherein the first frequency domain data comprises second frequency domain data transmitted on a first tone comprised in a first transmission bandwidth and third frequency domain data transmitted on a second tone comprised in a second transmission bandwidth; and
parsing, based on a first spreading sequence and a second spreading sequence, the second frequency domain data and the third frequency domain data that are comprised in the first frequency domain data, wherein the first spreading sequence and the second spreading sequence are Golay complementary sequences.

8. The method according to claim 7, wherein receiving the first frequency domain data on the transmission bandwidth comprises:
obtaining the first frequency domain data by using a first spatial stream; and
the method further comprises:
obtaining fourth frequency domain data by using a second spatial stream, wherein
the first frequency domain data is orthogonal to the fourth frequency domain data.

9. The method according to claim 8, further comprising:
parsing the fourth frequency domain data based on the first spreading sequence and the second spreading sequence.

10. The method according to claim 8, further comprising:
parsing the fourth frequency domain data based on a third spreading sequence and a fourth spreading sequence, wherein the third spreading sequence and the fourth spreading sequence are Golay complementary sequences, the third spreading sequence is orthogonal to the first spreading sequence, and the fourth spreading sequence is orthogonal to the second spreading sequence.

11. A communication apparatus, comprising a processing unit and a transceiver unit, wherein
the processing unit is configured to generate first frequency domain data; and
the transceiver unit is configured to map the first frequency domain data to a tone comprised in a transmission bandwidth for transmission, wherein the transmission bandwidth comprises a first transmission bandwidth and a second transmission bandwidth, the first frequency domain data comprises second frequency domain data mapped to a first tone comprised in the first transmission bandwidth and third frequency domain data mapped to a second tone comprised in the second transmission bandwidth, and the second frequency domain data is in mirror conjugation and alternating negation with the third frequency domain data.

12. The apparatus according to claim 11, wherein the second frequency domain data comprises a first frequency domain data segment and a second frequency domain data segment, the first frequency domain data segment is a frequency domain data segment obtained through spreading based on a first spreading sequence, the second frequency domain data segment is a frequency domain data segment obtained through spreading based on a second spreading sequence, and the first spreading sequence and the second spreading sequence are Golay complementary sequences.

13. The apparatus according to claim 11, wherein the transceiver unit is specifically configured to:
send, by using a first spatial stream, the first frequency domain data mapped to the tone; and
the transceiver unit is further configured to send fourth frequency domain data by using a second spatial stream, wherein
the first frequency domain data mapped to the tone is orthogonal to the fourth frequency domain data.

14. The apparatus according to claim 13, wherein the fourth frequency domain data is in a reverse order of the first frequency domain data.

15. The apparatus according to claim 13, wherein the fourth frequency domain data comprises fifth frequency domain data and sixth frequency domain data; and the fifth frequency domain data is opposite to the second frequency domain data; or the fifth frequency domain data is mapped to the first tone for transmission, the sixth frequency domain data is mapped to the second tone for transmission, the fifth frequency domain data is the same as the third frequency domain data, and the sixth frequency domain data is opposite to the first frequency domain data.

16. The apparatus according to claim 13, wherein the second frequency domain data comprises a first frequency domain data segment and a second frequency domain data segment, the first frequency domain data segment is a frequency domain data segment obtained through spreading based on a first spreading sequence, the second frequency domain data segment is a frequency domain data segment obtained through spreading based on a second spreading sequence, and the first spreading sequence and the second spreading sequence are Golay complementary sequences;
the fourth frequency domain data comprises fifth frequency domain data and sixth frequency domain data, the fifth frequency domain data is in mirror conjugation and alternating negation with the sixth frequency domain data, the fifth frequency domain data comprises a third frequency domain data segment and a fourth frequency domain data segment, the third frequency domain data segment is a frequency domain data segment obtained through spreading based on a third spreading sequence, and the fourth frequency domain data segment is a frequency domain data segment obtained through spreading based on a fourth spreading sequence; and
the third spreading sequence is orthogonal to the first spreading sequence, and the fourth spreading sequence is orthogonal to the second spreading sequence.

17. A communication apparatus, comprising a processing unit and a transceiver unit, wherein
the transceiver unit is configured to receive first frequency domain data on a transmission bandwidth, wherein the first frequency domain data comprises second frequency domain data transmitted on a first tone comprised in a first transmission bandwidth and third frequency domain data transmitted on a second tone comprised in a second transmission bandwidth; and
the processing unit is configured to parse, based on a first spreading sequence and a second spreading sequence, the second frequency domain data and the third frequency domain data that are comprised in the first frequency domain data, wherein the first spreading sequence and the second spreading sequence are Golay complementary sequences.

18. The apparatus according to claim 17, wherein the transceiver unit is specifically configured to:
obtain the first frequency domain data by using a first spatial stream; and
the transceiver unit is further configured to obtain fourth frequency domain data by using a second spatial stream, wherein
the first frequency domain data is orthogonal to the fourth frequency domain data.

19. The apparatus according to claim 18, wherein the processing unit is further configured to:
parse the fourth frequency domain data based on the first spreading sequence and the second spreading sequence.

20. The apparatus according to claim 18, wherein the processing unit is further configured to:
parse the fourth frequency domain data based on a third spreading sequence and a fourth spreading sequence, wherein the third spreading sequence and the fourth spreading sequence are Golay complementary sequences, the third spreading sequence is orthogonal to the first spreading sequence, and the fourth spreading sequence is orthogonal to the second spreading sequence.

21. A computer-readable storage medium, wherein the computer-readable storage medium stores computer-executable instructions, and when the computer-executable instructions are invoked by a communication apparatus, the communication apparatus is enabled to perform the method according to any one of claims 1 to 6 or the communication apparatus is enabled to perform the method according to any one of claims 7 to 10.

22. A chip system, wherein the chip system comprises:
a communication interface; and
a processor, configured to invoke and run instructions through the communication interface, to enable a device on which the chip system is installed to perform the method according to any one of claims 1 to 6, or enable a device on which the chip system is installed to perform the method according to any one of claims 7 to 10.
